# EUROPEAN PATENT SPECIFICATION

(11) **EP 3 523 179 B1**
(45) Date of publication and mention of the grant of the patent: **08.12.2021**
(21) Application number: 17783811.7
(22) Date of filing: 06.10.2017
(51) Int. Cl.: B62D 5/04, B62D 6/06

(54) **ELECTRIC ASSISTED POWER STEERING SETTINGS ADJUSTMENT**
ANPASSUNG DER EINSTELLUNGEN EINER ELEKTRISCHEN SERVOLENKUNG
AJUSTAGE DE L'ÉTALONNAGE D'UNE DIRECTION ASSISTÉE

(30) Priority: 06.10.2016 IT 201600100549
(43) Date of publication of application: 14.08.2019
(73) Proprietor: CNH Industrial Italia S.P.A., 10135 Turin (IT)
(72) Inventor: FERRARI, Luca, 41043 Formigine (Modena) (IT)
(74) Representative: CNH Industrial IP Department
(86) International application number: PCT/EP2017/075436
(87) International publication number: WO 2018/065560

(56) References cited:
- GB-A- 2 259 063
- US-A1- 2009 206 589

## Description

### BACKGROUND OF THE INVENTION

The present invention relates to a power steering system for vehicles, and, more specifically to an electric assisted power steering system for off-road vehicles.

Vehicles in the form of off-road vehicles can take many forms, such as agricultural tractors, construction loaders, and military vehicles. In the case of an agricultural tractor, a chassis typically supports front and rear laterally extending axles having wheels rotatably affixed at the ends of the axles. Rear axles are commonly rigidly connected to the chassis, and there is often no suspension between the rear axle and the chassis. Tire deflection alone provides a cushioning between a rough surface and the chassis. However, in certain instances, a suspension between the rear axle and chassis may be provided. Front axles may be pivotally attached to the front of the chassis to rotate transversely with respect to the longitudinal axis of the chassis, around a pivot axis located proximate to the longitudinal middle of the axle. However, in many instances, the front axle may be connected to the front of the chassis by way of a suspension, which provides for a smooth ride over rough surfaces and consistent ground pressure between the four wheels when on uneven ground.

The front axle of an agricultural tractor is typically a steerable axle having steering knuckles upon which the front wheels rotate, and which are pivotally connected to the front axle. The steering knuckles are provided with steering arms, which are pivotally connected to a double acting hydraulic cylinder by way of extensible steering linkage arms. In this way, the front wheels are controlled and coordinated in their rotation about the pivot axis between the steering knuckles and the front axle, so that proper steering geometry is preserved as the vehicle is steered. In order to steer the steerable axle of the agricultural tractor by way of the double acting hydraulic cylinder, it is known to utilize a hydraulic servomechanism, such as a hydraulic steering unit (HSU). The HSU is hydraulically connected to a hydraulic pump, which provides power needed to assist an operator in turning the very large and heavy front wheels. The hydraulic flow and pressure provided by the pump is directed to a servovalve within the HSU, which may be a double acting, bidirectional proportional valve having a rotary input. This rotary input is connected to the lower end of a steering mechanism, such as a rotatable steering column having a steering input member, which may be a steering wheel.

Rotation of the steering wheel, therefore, results in rotation of the rotary input of the double acting, bidirectional proportional valve, which in turn causes movement of the valve spool to either side of a center (closed) position, so that the opening of the servovalve depends on the turning of the steering wheel and steering column. Hydraulic flow and pressure then proceeds from the double acting, bidirectional proportional valve to the double acting hydraulic cylinder, in order to steer the agricultural tractor.

Off-road vehicles, and agricultural tractors particularly, are used in ways that result in large variations in the vehicle weight distribution. Further, they are used in ways that result in large variations in the dynamic forces to which they are subject. For example, agricultural tractors are often used with front attachments, such as a loader, plough, or snow blower. The additional weight and inertia attached to the front of the tractor tends to require the operator steering the tractor to provide more steering torque, or makes the steering feel "stiff," for a given level of steering assistance. As another example, agricultural tractors are often used with trailers or implements that are towed behind the tractor. These trailers or implements are often large, heavy, and resistively engaged with the ground, so that additional weight, drag, and inertia must be overcome in moving them forward. Additionally, part of the weight of the trailers or implements may be borne by the regular or three point hitch of the tractor. This weight may be borne directly or even cantilevered behind the tractor. As a result, weight transfer occurs from the front to the rear axle of the tractor both from the traction forces produced in towing and from the weight being borne by the regular or three point hitch. Similarly, agricultural tractors are often used with rear attachments, such as graders, tillers, mowers, or bale spears that are directly and/or in cantilevered fashion supported by the three point hitch, further transferring weight from the front to the rear axle of the tractor. This tends to require the operator steering the tractor to provide less steering torque, or makes the steering feel "soft," for a given level of steering assistance.

Currently, the amount of assistance provided by the HSU is usually determined only by the leaf springs within the HSU, and is generally almost constant in operation. However, it is known to use an electric motor connected to or integrated with the steering column in order to provide electric assisted power steering that can add or subtract from the amount of steering assistance provided by the HSU.

For example, International Patent Application No. 2013/034514 A1 teaches an electric motor that, in conjunction with the HSU, assists the operator in steering the vehicle.

This electric assisted power steering performs both position control and torque control. The '514 application uses two additional sensors in order to regulate its function, a torque sensor and a wheel angle position sensor. The torque sensor measures torque being delivered by the steering column, which is a combination of the electric assisted power steering torque and the torque provided by the operator, and compares it against a defined torque target. The wheel angle position sensor is used for steering position control. Together, the sensors and electric motor of the '514 application are used to provide different levels of assistance according to modes selected by the operator or selected automatically. Such modes include damped steering for use in headlands and on rutted roads, maximum assistance or "effortless" steering for use in headlands, auto centering for use when driving on road, and lock to lock assistance when making sharp maneuvers. The controller of the '514 application is programmable and controlled via a human to machine interface (HMI). However, the '514 application in no way provides for compensating steering assistance according to variations in the vehicle's weight distribution.

International Patent Application No. 2010/015379 A1 teaches various ways of adjusting steering torque, including use of an electric motor, in response to the trailer load of a vehicle. The presence of a trailer attached to the vehicle is determined by either a manual switch or by a sensor, which sensor may determine on a continuum the load on the trailer coupling. This information is used to maintain a familiar steering feel and improved control during operation of the vehicle with a trailer attached. However, this sensed load on the trailer coupling is a function of the weight aspect of the trailer, rather than sensed or calculated variation in the weight distribution of the tractor itself. Similarly, in German Patent No. DE 10 2004 020 142 A1 teaches modification of steering torque upon recognition that a trailer is attached to the vehicle via manual input, a switch, detection of trailer lights being plugged in or by way of information transferred from the trailer through a data link. Actual modification of the steering torque only occurs according to the '142 patent when the driver of the vehicle turns the steering wheel too fast or too forcefully under conditions where, according to a predetermined dynamics model based on the mass and center of gravity height of the trailer and upon longitudinal velocity and road conditions, a predetermined trigger condition is met. Again, the '142 patent focuses on aspects of the trailer, and not upon sensed or calculated variation in the weight distribution of the tractor itself. GB2259063 relates to a steering control method for a motor vehicle with a differential in which an electric motor is employed to provide an assisted force for improving a traction performance and to attain an optimum control of said steering wheel without fluctuation. The system of GB 2 259 063 A has close similitude to that of the invention.

What is needed in the art, therefore, is a power steering system for off-road vehicles that can compensate for large variations in the vehicle weight distribution by adding to or subtracting from the steering torque provided by the operator and supplemented by the HSU.

### SUMMARY OF THE INVENTION

The present invention concerns a power steering system for an off-road vehicle according to claim 1.

The present invention provides such a way to compensate the steering torque for variations in the vehicle weight distribution of an off-road vehicle, in particular in the weight distribution of an agricultural tractor. Embodiments of the electric assisted power steering (EPS) system according to the present invention use an electric assisted power steering (EPS) unit having a rotary electric motor connected to or integrated with the steering column to add to or subtract from the steering torque provided by the operator and supplemented by a non-reactive hydraulic steering unit (HSU), in order to make the steering feel of the vehicle as perceived by an operator "stiffer" (i.e. - requiring greater torque input by the operator) or "softer" (i.e. - requiring less torque input by the operator). This may include simply adding to or subtracting from the steering torque provided by the operator and the HSU sufficiently to restore a base-line level of required steering torque, or may further include adding to or subtracting from the steering torque provided by the operator and the HSU to create an amount of required steering torque particularly suited to the operating condition. Further, embodiments of the present invention may add or subtract from the steering torque provided by the operator and the HSU sufficiently to alert an operator to an overload condition, or even sufficiently to indicate that the agricultural tractor is in a proper ballasted condition. Note that the EPS system described herein is largely described as being applied to steering an off-road vehicle having a steerable front axle. However, the EPS system described herein is contemplated as being equally applicable to an articulated vehicle that steers by way of a central hinged joint in the chassis of the vehicle. Further, the EPS system described herein is contemplated as being equally applicable to a vehicle having a steerable rear axle.

Embodiments of the EPS system according to the present invention include the EPS unit being connected to an electronic control unit (ECU) having a signal generator. The signal generator generates control signals that determine the magnitude and direction of action of the torque to be applied by the rotary electric motor of the EPS unit. The ECU may determine the magnitude and direction of action of the torque to be applied using information provided by several sensors on the agricultural tractor, which sensors may communicate with the ECU by way of an ISOBUS connection and an ISOBUS network. The ECU may further determine the magnitude and direction of action of the torque to be applied using additional information provided by the ISOBUS network, such as information provided that concerns characteristics of a trailer, implement, or attachment that is connected to the agricultural tractor. An ISOBUS network, for the purposes of this disclosure, is defined as a serial control and communications data network that uses a communication protocol such as ISO 11783, but may also include any other communication protocol, such as SAE J1939.

The sensors providing information to the ECU for determining the magnitude and direction of action of the torque to be applied, according to embodiments of the EPS system of the present invention, may include an EPS torque sensor that is used to measure the existing torque on the steering column, which is the summation of the torque currently being provided by the electric motor of the EPS and the torque being provided by the operator. In this way, the ECU may control the electric motor of the EPS to deliver a certain torque, either positive or negative, in order to reach a desired torque target based on feedback from the EPS torque sensor. The sensors providing information to the ECU for determining the magnitude and direction of action of the torque to be applied, according to embodiments of the EPS system of the present invention, may further include a wheel position sensor. In this way, the ECU may control the electric motor of the EPS to deliver a certain torque, either positive or negative, as a function of the current steering angle of the agricultural vehicle.

Embodiments of the EPS system according to the present invention may alter the steering feel of the vehicle as perceived by an operator in order to make the steering feel "stiffer" or "softer" as a function of the current weight distribution of the vehicle. Again, this alteration of the steering feel may be done with a target of restoring a base-line level of required steering torque, or may include adding to or subtracting from the steering torque to create an amount of required steering torque particularly suited to the current weight distribution of the vehicle, or may include adding or subtracting from the steering torque provided by the operator and the HSU sufficiently to alert an operator to an overload condition based on the current weight distribution of the vehicle, or even sufficiently to indicate that the agricultural tractor is in a proper ballasted condition given the current weight distribution of the vehicle. The ECU of the EPS unit according to embodiments of the EPS system of the present invention may calculate the current weight distribution of the vehicle and, as a function thereof, the amount of required steering torque using information provided e.g. by way of the ISOBUS network from one or more fluid pressure sensors, which may further be pneumatic or hydraulic pressure sensors. These fluid pressure sensors may be connected to any one or to any combination of fluid actuating or support cylinder or cylinders that are part of a front or rear suspension of the vehicle, fluid actuating or support cylinder or cylinders that are part of a rear three point hitch on the vehicle, fluid actuating or support cylinder or cylinders that are part of a front hitch on the vehicle, and/or fluid actuating or support cylinder or cylinders that are part of a loader or other attachment on the front or rear of the vehicle. The fluid actuating or support cylinder or cylinders may be hydraulic, gaseous, or pneumatic cylinders.

The ECU of the EPS unit according to embodiments of the EPS system of the present invention may further calculate the current weight distribution of the vehicle and, as a function thereof, the amount of required steering torque using information provided e.g. by way of the ISOBUS network from one or more sensors of another type. The one or more sensors of another type may be, as non-limiting examples, proximity, strain, or displacement sensors, or combinations thereof, connected to the structure, springs, or cylinders of the front or rear suspensions or axles of the vehicle, of the rear three point hitch of the vehicle, of the front hitch of the vehicle, or of the loader or other attachment on the front or rear of the vehicle. The ECU of the EPS unit according to embodiments of the EPS system of the present invention may further calculate the current weight distribution of the vehicle and, as a function thereof, the amount of required steering torque using information provided by way of the ISOBUS network from one or more trailers or implements connected to the vehicle. This information may include the dimensional characteristics, the ground engaging characteristics, and/or the weight of the trailer(s) or implement(s).

Embodiments of the EPS system according to the present invention may alter the steering feel of the vehicle as perceived by an operator in order to make the steering feel "softer" in response to increased weight on a loader or other attachment on the front of the agricultural tractor, in response to increased weight on the front hitch of the agricultural tractor, or in response to increased weight on the front axle of the agricultural tractor. These increased weights may be determined by the ECU on the basis of information provided by the fluid pressure sensors connected to the fluid actuating or support cylinders of each of the loader or other attachment on the front of the agricultural tractor, the front hitch of the agricultural tractor, or the front suspension of the agricultural tractor. These increased weights may be determined by the ECU on the basis of information provided by the sensors of another type, such as proximity, strain, or displacement sensors, or combinations thereof, connected to the structure, springs, or cylinders of the front suspension or axle of the vehicle, of the front hitch of the vehicle, or of the loader or other attachment on the front of the vehicle.

Embodiments of the EPS system according to the present invention may alter the steering feel of the vehicle as perceived by an operator in order to make the steering feel "stiffer" in response to increased weight on an attachment on the rear of the agricultural tractor, in response to increased weight on the rear three point hitch of the agricultural tractor, or in response to increased weight on the rear axle of the agricultural tractor. These increased weights may be determined by the ECU on the basis of information provided by the fluid pressure sensors connected to the fluid actuating or support cylinders of each of the attachment on the rear of the agricultural tractor, the rear three point hitch of the agricultural tractor, or the rear suspension of the agricultural tractor. These increased weights may be determined by the ECU on the basis of information provided by the sensors of another type, such as proximity, strain, or displacement sensors, or combinations thereof, connected to the structure, springs, or cylinders of the rear suspension or axle of the vehicle, of the rear three point hitch of the vehicle, or of the attachment on the rear of the vehicle.

Embodiments of the EPS system according to the present invention may alter the steering feel of the vehicle as perceived by an operator in order to make the steering feel "stiffer" in response to information provided e.g. via the ISOBUS network that concerns characteristics of a trailer or implement that is connected to the agricultural tractor. In particular, the steering may be altered to feel "stiffer" in response to the connection of a trailer or implement that changes the weight distribution of the agricultural tractor by way of shifting weight from the front axle to the rear axle as a result of large tractive forces. These large tractive forces may result from the agricultural tractor pulling a trailer or implement that is dimensionally large or heavy, or from pulling a trailer or implement on-road at relatively higher speeds than used in the field, or from pulling an implement that is resistively engaged with the ground, such as a tillage implement. Such characteristic information of the trailer or implement may be provided by the trailer or implement to the agricultural tractor e.g. by way of an ISOBUS network connection between the trailer or implement and the agricultural tractor. Alternately, the agricultural tractor may recognize the trailer or implement by other means, such as by a camera with recognition software resident on the ISOBUS network or a device connected thereto, or by wireless or short-range communications, such as Bluetooth or a similar wireless data exchange protocol.

Embodiments of the EPS system according to the present invention may alter the steering feel of the vehicle as perceived by an operator in response to increased weight on an attachment on the rear of the agricultural tractor, in response to increased weight on the rear three point hitch of the agricultural tractor, or in response to increased weight on the rear axle of the agricultural tractor, further in response to detecting the use of ballast on the front of the agricultural tractor. Again, the increased weights on the rear of the agricultural tractor may be determined by the ECU on the basis of information provided by fluid pressure sensors connected to the fluid actuating or support cylinders of each of the attachment on the rear of the agricultural tractor, the rear three point hitch of the agricultural tractor, or the rear suspension of the agricultural tractor, or on the basis of information provided by the sensors of another type, such as proximity, strain, or displacement sensors, or combinations thereof, connected to the structure, springs, or cylinders of the rear suspension or axle of the vehicle, of the rear three point hitch of the vehicle, or of the attachment on the rear of the vehicle. Detection of the use of ballast on the front of the agricultural tractor may be made on the basis of information provided by the fluid pressure sensors connected to the fluid actuating or support cylinders of the front hitch of the agricultural tractor if the ballast is attached thereto, or by the fluid pressure sensors connected to support cylinders of the front suspension of the agricultural tractor. Again, this alteration of the steering feel may be done with a target of restoring a base-line level of required steering torque to be provided by the operator, or may be done with a target of requiring an amount of required steering torque to be provided by the operator particularly suited to the weight distribution resulting from both the agricultural attachment or implement being attached to the rear of the agricultural tractor and the ballast being attached to the front of the agricultural tractor, or may be done with a target of requiring an amount of required steering torque to be provided by the operator sufficient to alert the operator to an overload condition, or sufficient to indicate that the agricultural tractor is in a proper ballasted condition.

In conjunction with altering the steering feel of the vehicle as perceived by an operator in order to make the steering feel "stiffer" or "softer" as a function of the current weight distribution of the vehicle, embodiments of the EPS system according to the present invention may alter the steering feel of the vehicle as a further function of the vehicle speed, rate of change of the vehicle speed, steering wheel position, rate of change of the steering wheel position, and/or steering position of a steering axle. Embodiments of the EPS system according to the present invention may alter the steering feel of the vehicle entirely autonomously, or may require action on the part of the operator, such as confirmation of the change to be made, such as through a human-machine interface (HMI) or simple switches. Alternately, embodiments of the EPS system according to the present invention may be programmable, so that conditions and adjustments to the alteration of the steering feel of the vehicle to be made by the EPS system may be entered and stored by the operator.

The invention in one form is directed to a power steering system for an off-road vehicle. The power steering system includes an electric assisted power steering (EPS) unit for adding and subtracting torque to a rotatable steering column. The EPS unit has an electronic control unit (ECU) configured to determine the magnitude and direction of action of the torque to be added or subtracted by the EPS unit. At least one sensor is configured to sense at least one of pressure, proximity, strain, and displacement in at least one of a component and an attachment of the off-road vehicle. The ECU of the EPS unit is connected to the at least one sensor. The ECU is configured to receive information from the at least one sensor and to use the information to determine a weight distribution of the off-road vehicle. The ECU is configured to control the EPS unit to add or subtract torque to the rotatable steering column as a function of the weight distribution of the off-road vehicle.

The invention in another form is directed to an off-road vehicle having a chassis, at least one steerable axle, and a steering mechanism. The steering mechanism includes a power steering system that has an electric assisted power steering (EPS) unit for adding and subtracting torque to a rotatable steering column. The EPS unit has an electronic control unit (ECU) configured to determine the magnitude and direction of action of the torque to be added or subtracted by the EPS unit. At least one sensor is configured to sense at least one of pressure, proximity, strain, and displacement in at least one of a component and an attachment of the off-road vehicle. The ECU of the EPS unit is connected to the at least one sensor. The ECU is configured to receive information from the at least one sensor and to use the information to determine a weight distribution of the off-road vehicle. The ECU is configured to control the EPS unit to add or subtract torque to the rotatable steering column as a function of the weight distribution of the off-road vehicle.

An advantage of an embodiment of the present invention is that it is able to adjust the relative stiffness of the steering wheel autonomously, according to the weight distribution of the vehicle. Another advantage is that it can restore the amount of steering torque required of an operator to a base-line level, or may create an amount of required steering torque particularly suited to the current weight distribution or operating conditions of the vehicle. Another advantage is that it can create a required amount of steering torque to be provided by the operator sufficient to alert the operator to an overload condition, or sufficient to indicate that the agricultural tractor is in a proper ballasted condition.

Additional features and advantages of the invention will be made apparent from the following detailed description of illustrative embodiments that proceeds with reference to the accompanying drawings.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a front left isometric view of an agricultural tractor according to an embodiment of the invention;
Fig. 2 is a front left isometric view of a steering mechanism using an electric assisted power steering unit, according to an embodiment of the invention;
Fig. 3 is a front right isometric view of a steering mechanism using an electric assisted power steering unit, according to an embodiment of the invention;
Fig. 4 is a front left isometric view of a front suspension of an agricultural tractor according to an embodiment of the invention;
Fig. 5 is a rear view of a three point hitch of an agricultural tractor according to an embodiment of the invention;
Fig. 6 is a front left isometric view of a front hitch of an agricultural tractor according to an embodiment of the invention;
Fig. 7 is a front left isometric view of an agricultural tractor with a loader attachment according to an embodiment of the invention;
Fig. 8a is a representative illustration of changes in the proportion of steering torque provided by an electric assisted power steering unit between an agricultural tractor without any load or attachment and an agricultural tractor having a load on a loader bucket, according to an embodiment of the invention;
Fig. 8b is a representative illustration of changes in the proportion of steering torque provided by an electric assisted power steering unit between an agricultural tractor without any load or attachment and an agricultural tractor having a load on a front hitch, according to an embodiment of the invention;
Fig. 8c is a representative illustration of changes in the proportion of steering torque provided by an electric assisted power steering unit between an agricultural tractor without any load or attachment and an agricultural tractor having a greater load on its front axle, according to an embodiment of the invention;
Fig. 9a is a representative illustration of changes in the proportion of steering torque provided by an electric assisted power steering unit between an agricultural tractor without any load or attachment and an agricultural tractor having a load on a three point hitch, according to an embodiment of the invention;
Fig. 9b is a representative illustration of changes in the proportion of steering torque provided by an electric assisted power steering unit between an agricultural tractor without any load or attachment and an agricultural tractor having a greater load on its rear axle, according to an embodiment of the invention;
Fig. 10a is a representative illustration of changes in the proportion of steering torque provided by an electric assisted power steering unit between an agricultural tractor without any load or attachment and an agricultural tractor pulling a trailer, according to an embodiment of the invention;
Fig. 10b is a representative illustration of changes in the proportion of steering torque provided by an electric assisted power steering unit between an agricultural tractor without any load or attachment and an agricultural tractor pulling an agricultural implement, according to an embodiment of the invention; and
Fig. 11 is a representative illustration of changes in the proportion of steering torque provided by an electric assisted power steering unit between an agricultural tractor without any load, an agricultural tractor having a load on a three point hitch, and an agricultural tractor having a load on a three point hitch and front ballast weight added in order to balance the load.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The terms "forward", "rearward", "left" and "right", when used in connection with the agricultural tractor and/or components thereof are usually determined with reference to the direction of forward operative travel of the vehicle, but again, they should not be construed as limiting. The terms "longitudinal" and "transverse" are determined with reference to the fore-and-aft direction of the agricultural tractor and are equally not to be construed as limiting. The term "agricultural tractor" is used herein for convenience, but should not be construed as limiting, as embodiments of the present invention are contemplated as encompassing any load-bearing or off-road vehicle to which the general principles of the disclosure may apply.

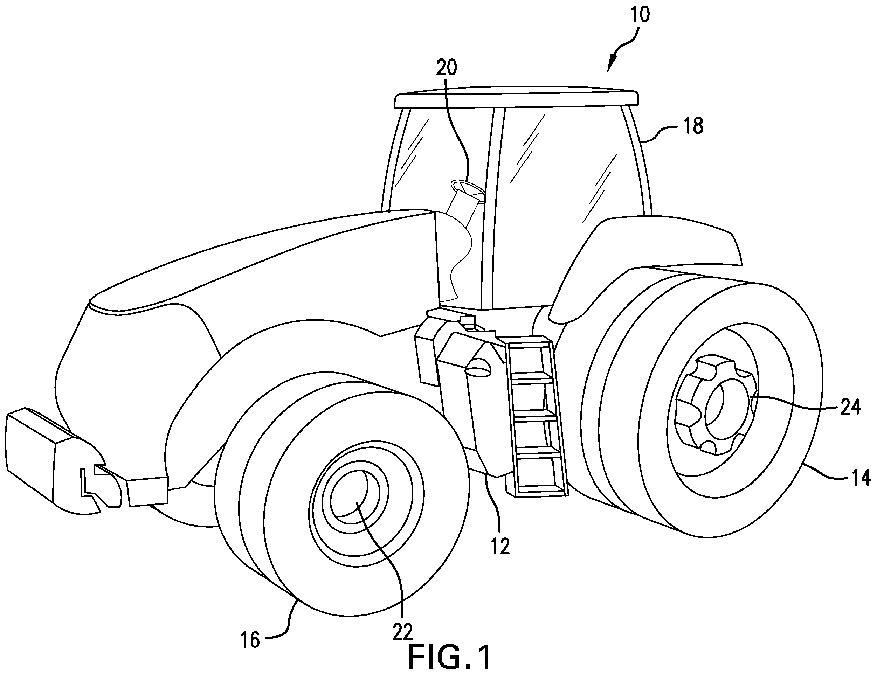

Referring now to the drawings, and more particularly to Fig. 1, there is shown a front left isometric view of a self-propelled vehicle in the form of an agricultural tractor 10 having a chassis 12, rear wheels 14, and front wheels 16. Although the agricultural tractor 10 is shown as including wheels, is also to be understood that the agricultural tractor 10 may include any type of ground engaging member, such as full tracks or half-tracks. The front wheels 16 are attached to at least one front axle 22, which may further be stub axles, and the rear wheels 14 are attached to at least one rear axle 24. An operator cab 18 is provided to shield an operator from the elements. The operator steers the agricultural tractor 10 using a steering input member 20, such as a steering wheel or joystick.

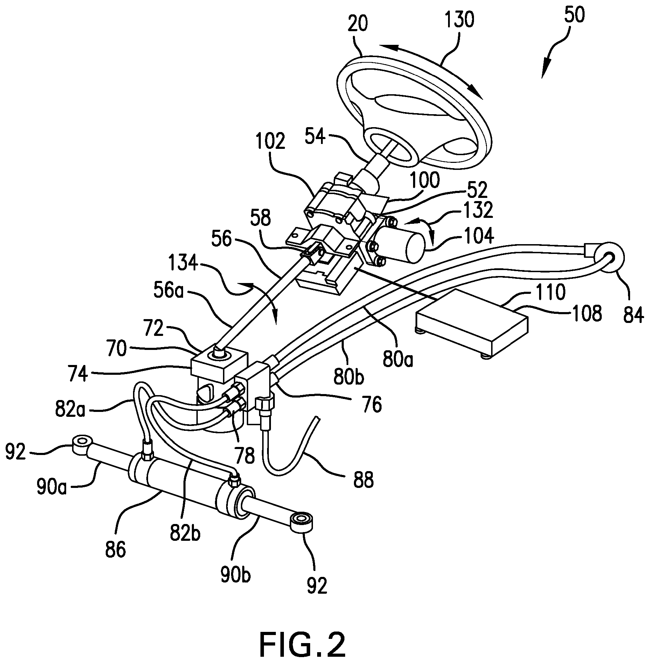

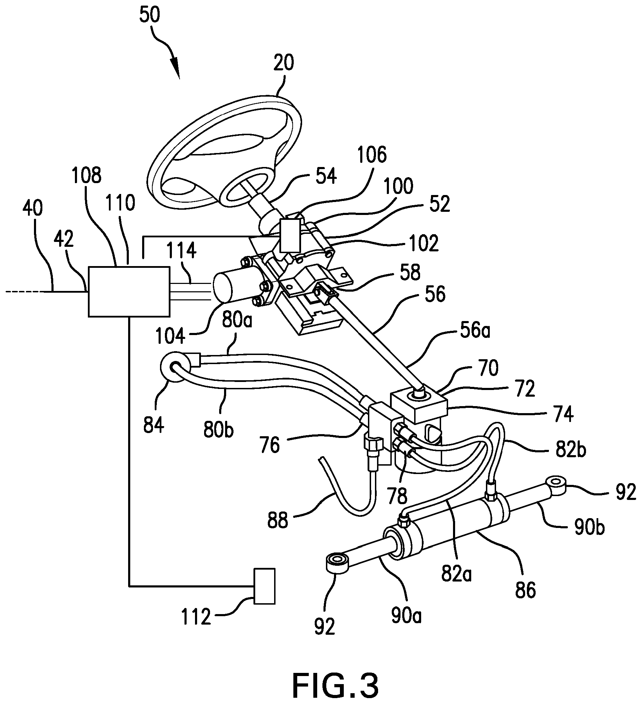

Turning now to Figs. 2 and 3, a left front isometric view and a right front isometric view, respectively, is shown of a steering mechanism 50 according to an embodiment of the invention, including a rotatable steering column 54, a first steering servomechanism 70, and a second steering servomechanism 100. The rotatable steering column 54 may include a steering input member 20, shown in the form of a steering wheel. A steering shaft 56, which may be provided with one or more joints 58 to provide flexibility, connects the steering input member 20, rotatable steering column 54, and second steering servomechanism 100 with the first steering servomechanism 70.

The first steering servomechanism 70 generally includes a non-reactive hydraulic steering unit (HSU) 72 hydraulically connected to a hydraulic pump 84, which provides some of the power needed to assist an operator in turning the very large and heavy front wheels 16 (not shown) of the agricultural tractor 10. The amount of power provided by the non-reactive HSU 72 is generally fixed in its proportion of assistance provided to the operator in turning the front wheels 16, and does not generally react to further inputs. The hydraulic flow and pressure provided by the hydraulic pump 84 is directed, by way of hydraulic feedlines 80a and 80b, and by way of input ports 76, to a servovalve 74 within the HSU 72, which may be a double acting, bidirectional proportional valve (not shown) having a rotary input. This rotary input is connected to the lower end 56a of the steering shaft 56 extending from the second steering servomechanism 100 to the first steering servomechanism 70. Rotation of the steering input member 20, therefore, results in rotation of the rotary input of the double acting, bidirectional proportional valve, which in turn causes movement of the valve spool (not shown) to either side of a center (closed) position, so that the opening of the servovalve 74 depends on the turning of the steering input member 20 and rotatable steering column 54. Hydraulic flow and pressure then proceeds from the double acting, bidirectional proportional valve of the HSU 72, by way of output ports 78 and hydraulic feedlines 82a and 82b, to a double acting hydraulic cylinder 86, in order to steer the agricultural tractor 10. Hydraulic fluid then returns to a reservoir (not shown) by way of a hydraulic fluid return line 88. The double acting hydraulic cylinder 86 is connected to the front axle 22 (not shown) of the agricultural tractor 10 by way of extensible steering linkage arms 90a and 90b and joints 92.

The second steering servomechanism 100 includes an electric assisted power steering (EPS) system 52 according to an embodiment of the present invention. The EPS system 52 is provided with an EPS unit 102 having a rotary electric motor 104, which is operably engaged with the rotatable steering column 54 of the steering mechanism 50. An EPS electronic control unit (ECU) 108 is connected to the EPS unit 102 by way of a signal generator 110 that generates control signals in order to direct the rotary electric motor 104 of the EPS unit 102 to add or subtract torque from the rotatable steering column 54. The signal generator 110 in some embodiments of the present invention may generate control signals in the form of directly controlling the motor current 114 sent to the rotary electric motor 104 of the EPS unit 102. The EPS ECU 108 may be connected to an ISOBUS network or CANbus 40 by way of an ISOBUS or CANbus connection 42, by which it receives information that the EPS ECU 108 uses to determine the appropriate amount of torque to add or subtract from the rotatable steering column 54, as will be shown in greater detail.

The EPS ECU 108 may further be connected to an EPS torque sensor 106 used to measure the existing EPS torque 134 on the steering column, which is the summation of the electric motor torque 132 currently being provided by the rotary electric motor 104 of the EPS unit 102 and the driver torque 130 being provided by the operator. In this way, the EPS ECU 108 may control the rotary electric motor 104 of the EPS unit 102 to deliver a certain electric motor torque 132, either positive or negative, in order to reach a desired EPS torque 134 target based on feedback from the EPS torque sensor 106. The sensors providing information to the EPS ECU 102 for determining the magnitude and direction of action of the electric motor torque 132 to be applied, according to embodiments of the EPS system 52 of the present invention, may further include a wheel position sensor 112. In this way, the EPS ECU 108 may further control the rotary electric motor 104 of the EPS unit 102 to deliver a certain electric motor torque 132, either positive or negative, as a function of the current steering angle of the agricultural tractor 10.

The EPS ECU 108 may be connected by way of the ISOBUS network or CANbus 40 to one or more fluid pressure sensors, such as pneumatic or hydraulic pressure sensors, which provide the EPS ECU 108 with information used to determine the current weight distribution of the agricultural tractor 10 and to thereby alter the steering feel of the agricultural tractor 10 as perceived by an operator in order to make the steering feel "stiffer" or "softer" as a function of the current weight distribution of the agricultural tractor 10. As noted previously, this alteration of the steering feel may be done with a target of restoring a base-line level of required driver torque 130, or may include adding to or subtracting from the electric motor torque 134 in order to create an amount of required driver torque 130 particularly suited to the current weight distribution of the agricultural tractor 10. As will be shown in subsequent figures, these fluid pressure sensors may be connected to any one or to any combination of fluid actuating or support cylinder or cylinders that are part of a front or rear suspension of the agricultural tractor 10, fluid actuating or support cylinder or cylinders that are part of a rear three point hitch on the agricultural tractor 10, fluid actuating or support cylinder or cylinders that are part of a front hitch on the agricultural tractor 10, and/or fluid actuating or support cylinder or cylinders that are part of a loader or other attachment on the front or rear of the agricultural tractor 10.

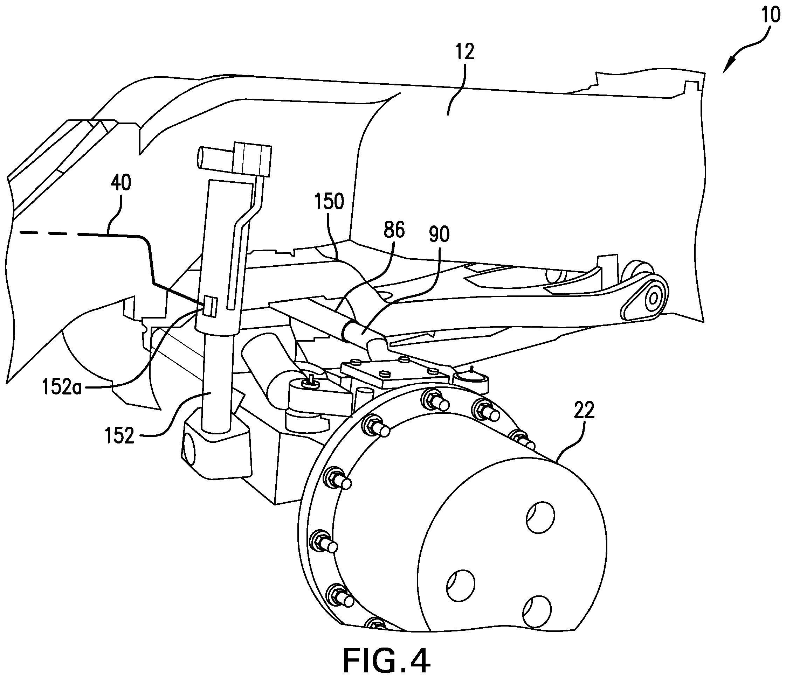

Turning now to Fig. 4, therefore, a front left isometric view of a front suspension 150 of the agricultural tractor 10 is shown according to an embodiment of the invention. The front suspension 150 is connected to the chassis 12 of the agricultural tractor 10, and is illustrated as a leading arm live axle suspension, although it is contemplated that any of several types of suspensions may be used, such as multilink or independent suspensions, as non-limiting examples. Further, embodiments of the present invention may be used with an agricultural tractor 10 having a driving front axle or a non-driving front axle. The front axle 22 is carried by the front suspension 150 so that part of the weight of the agricultural tractor 10 is upheld by a front suspension cylinder or cylinders 152. In the embodiment of the present invention shown in Fig. 4, the front suspension cylinders 152 are hydraulic cylinders, although it is contemplated that pneumatic cylinders or springs may be utilized. The front axle 22 is steered by the double acting hydraulic cylinder 86 and extensible steering linkage arms 90 of the steering mechanism 50. A pressure sensor 152a is connected to one or both of the front suspension cylinders 152 in such a way that the fluid pressure within the front suspension cylinders 152 results in information being sent to the EPS ECU 108 of the EPS unit 102 (not shown) e.g. by way of the ISOBUS network or CANbus 40. In this way the EPS unit 102 can alter the steering feel of the agricultural tractor 10 as perceived by an operator using the rotary electric motor 104 (not shown) in order to make the steering feel "stiffer" or "softer" as a function of the current weight distribution of the agricultural tractor 10 as derived at least partially from the load on the front axle 22 and front suspension 150.

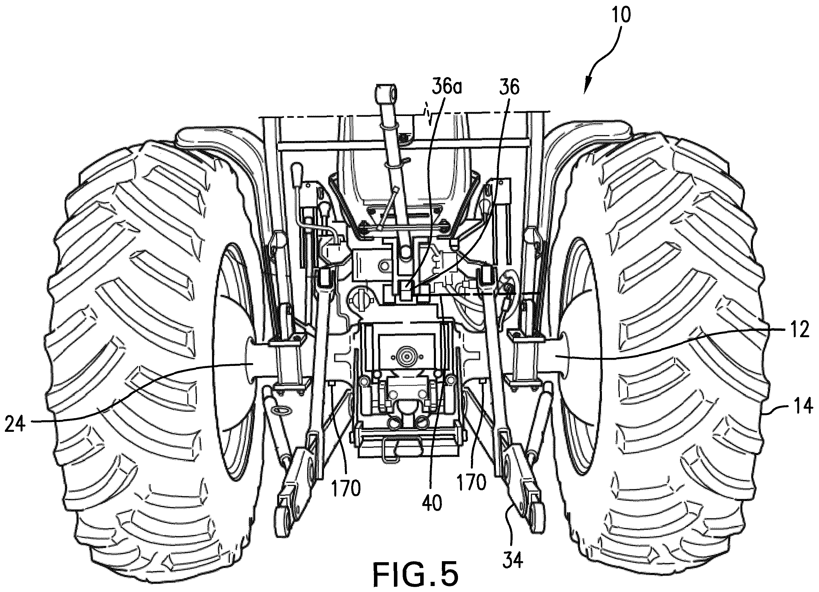

Turning now to Fig. 5, a rear view of an agricultural tractor 10 is shown according to an embodiment of the present invention having a rear three point hitch 34. The agricultural tractor 10 shown in Fig. 5 is again provided with a front axle 22 having front wheels 16 (not shown) and a rear axle 24 having rear wheels 14. The rear three point hitch 34 is attached to the chassis 12 of the agricultural tractor 10, and is provided with at least one hydraulic cylinder 36 (only partially visible) by which the rear three point hitch 34 may be raised and lowered. A pressure sensor 36a (only partially visible) is connected to the at least one hydraulic cylinder 36 in such a way that the fluid pressure within the at least one hydraulic cylinder 36 results in information being sent to the EPS ECU 108 of the EPS unit 102 (not shown) e.g. by way of the ISOBUS network or CANbus 40. In this way the EPS unit 102 can alter the steering feel of the agricultural tractor 10 as perceived by an operator using the rotary electric motor 104 (not shown) in order to make the steering feel "stiffer" or "softer" as a function of the current weight distribution of the agricultural tractor 10 as derived at least partially from the load on the rear three point hitch 34.

Fig. 5 also shows sensors 170 of another type by which the EPS ECU 108 of the EPS unit 102 can calculate the current weight distribution of the agricultural tractor 10. Specifically, the sensors 170 are strain gauges attached to the rear axle 24, which strain gauges are connected to the EPS ECU 108 of the EPS unit 102 e.g. by way of the ISOBUS network or CANbus 40. In this way the EPS unit 102 can alter the steering feel of the agricultural tractor 10 as perceived by an operator using the rotary electric motor 104 (not shown) in order to make the steering feel "stiffer" or "softer" as a function of the current weight distribution of the agricultural tractor 10 as derived at least partially from the load on the rear axle 24. Note that, while the sensors 170 of another type by which the EPS ECU 108 of the EPS unit 102 can calculate the current weight distribution of the agricultural tractor 10 are shown as strain gauges attached to the rear axle 24, such sensors 170 of another type may further be, as non-limiting examples, proximity, strain, or displacement sensors, or combinations thereof, connected to the structure, springs, or cylinders of the front or rear suspensions of the agricultural tractor 10, of the rear three point hitch 34 of the agricultural tractor 10, of the front hitch 160 of the agricultural tractor 10, or of the loader 32 or other attachment on the front or rear of the agricultural tractor 10, as applicable.

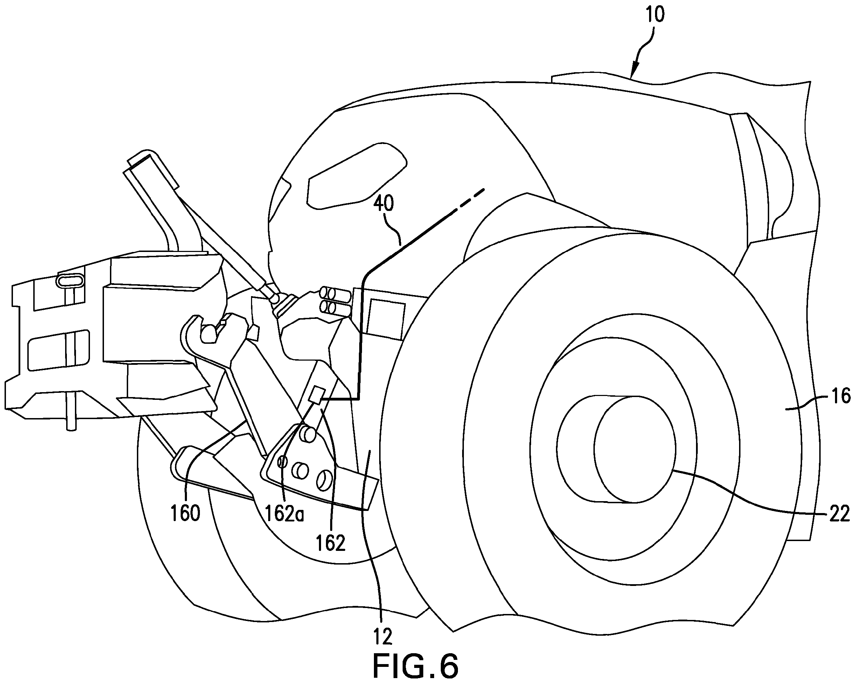

Turning now to Fig. 6, a front left isometric view of an agricultural tractor 10 is shown according to an embodiment of the invention having a front hitch 160. The agricultural tractor 10 shown in Fig. 6 is again provided with a front axle 22 having front wheels 16 and a rear axle 24 having rear wheels 14 (not shown). The front hitch 160 is attached to the chassis 12 of the agricultural tractor 10, and is provided with at least one hydraulic cylinder 162 by which the front hitch 160 may be raised and lowered. A pressure sensor 162a is connected to the at least one hydraulic cylinder 162 in such a way that the fluid pressure within the at least one hydraulic cylinder 162 results in information being sent to the EPS ECU 108 of the EPS unit 102 (not shown) e.g. by way of the ISOBUS network or CANbus 40. In this way the EPS unit 102 can alter the steering feel of the agricultural tractor 10 as perceived by an operator using the rotary electric motor 104 (not shown) in order to make the steering feel "stiffer" or "softer" as a function of the current weight distribution of the agricultural tractor 10 as derived at least partially from the load on the front hitch 160.

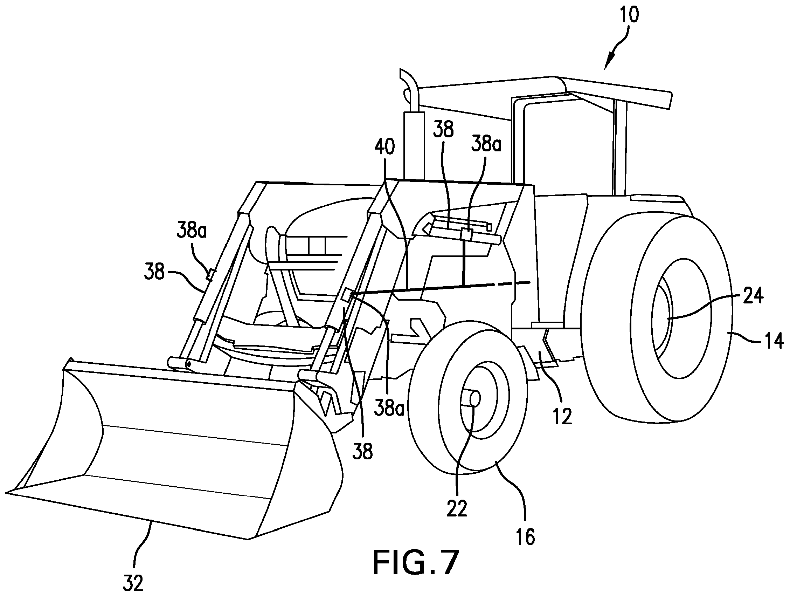

Turning now to Fig. 7, a front left isometric view of an agricultural tractor 10 is shown according to an embodiment of the invention having a loader 32 attached thereto. Note that, although the agricultural tractor 10 is shown having a loader 32 attached thereto, it is contemplated that embodiments of the present invention may be used with any number of attachments attached to the front or rear of the agricultural tractor 10, such as ploughs, snow blowers, or bale spears, as non-limiting examples, and are contemplated as being within the scope of the present invention. The agricultural tractor 10 shown in Fig. 7 is again provided with a front axle 22 having front wheels 16 and a rear axle 24 having rear wheels 14. The loader 32 is attached to the chassis 12 of the agricultural tractor 10, and is provided with multiple hydraulic cylinders 38 by which the loader 32 articulates and lifts various loads. Pressure sensors 38a are connected to the hydraulic cylinders 38 of the loader 32 in such a way that the fluid pressure within the hydraulic cylinders 38 results in information being sent to the EPS ECU 108 of the EPS unit 102 (not shown) e.g. by way of the ISOBUS network or CANbus 40. In this way the EPS unit 102 can alter the steering feel of the agricultural tractor 10 as perceived by an operator using the rotary electric motor 104 (not shown) in order to make the steering feel "stiffer" or "softer" as a function of the current weight distribution of the agricultural tractor 10 as derived at least partially from the load on the loader 32.

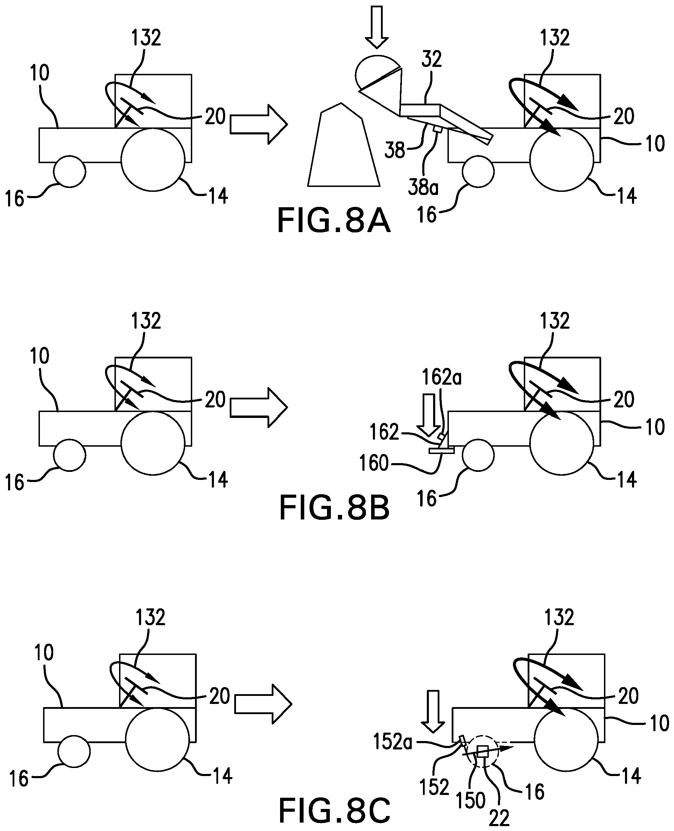

Turning now to Figs 8A, 8B, 8C, 9A, 9B, 10A, and 10B, various proportionate comparisons are illustrated of the amount of electric motor torque 132 (represented as torque about the steering input member 20) contributed by the EPS system 52 (not shown) under certain operating conditions of the agricultural tractor 10. The agricultural tractor 10 is again with a front axle 22 having front wheels 16 and a rear axle 24 having rear wheels 14. In Fig. 8A, comparison is made between the amount of electric motor torque 132 contributed by the EPS system 52 under conditions wherein the agricultural tractor 10 has a normal weight distribution (left side) and under conditions wherein the agricultural tractor 10 has an increased weight on the front wheels 16 as a result of a load on the loader 32 (right side). Loader hydraulic cylinders 38 and/or front suspension hydraulic cylinders 152 have increased hydraulic pressure as a result of the load on the loader 32, which is reported from the pressure sensors 38a and/or from the pressure sensors 152a to the EPS ECU 108 of the EPS unit 102 (not shown), and may be reported by way of the ISOBUS network or CANbus 40 (not shown). As a result, the EPS system 52 increases the amount of electric motor torque 132, resulting in a "softer" steering feel. Again, this alteration of the steering feel may be done with a target of restoring a base-line level of required steering torque to be provided by the operator, or may involve providing electric motor torque 132 sufficient to result in an amount of required steering torque to be provided by the operator particularly suited to the weight distribution resulting from the use of the loader 32. It is also contemplated in at least one embodiment of the present invention that the EPS system 52 may determine by way of excessive hydraulic pressure reported by the pressure sensors 38a and/or by the pressure sensors 152a that the loader 32 is overloaded and/or the front axle 22 is overloaded. In that event, the EPS system 52 may decrease the amount of electric motor torque 132, or add negative electric motor torque 132, resulting in an unusually "stiff' steering feel, in order to alert the operator to the overload condition.

Alternatively the operator may be signaled of an overload condition on the vehicle display.

In Fig. 8B, comparison is made between the amount of electric motor torque 132 contributed by the EPS system 52 (not shown) under conditions wherein the agricultural tractor 10 has a normal weight distribution (left side) and under conditions wherein the agricultural tractor 10 has an increased weight on the front wheels 16 as a result of a load on the front hitch 160 (right side). Front hitch hydraulic cylinders 162 and/or front suspension hydraulic cylinders 152 have increased hydraulic pressure as a result of the load on the front hitch 160, which is reported from the pressure sensors 162a and/or from the pressure sensors 152a to the EPS ECU 108 of the EPS unit 102 (not shown), and may be reported by way of the ISOBUS network or CANbus 40 (not shown). As a result, the EPS system 52 increases the amount of electric motor torque 132, resulting in a "softer" steering feel. Again, this alteration of the steering feel may be done with a target of restoring a base-line level of required steering torque to be provided by the operator, or may involve providing electric motor torque 132 sufficient to result in an amount of required steering torque to be provided by the operator particularly suited to the weight distribution resulting from the use of the front hitch 160. It is also contemplated in at least one embodiment of the present invention that the EPS system 52 may determine by way of excessive hydraulic pressure reported by the pressure sensors 162a and/or by the pressure sensors 152a that the front hitch 160 is overloaded and/or the front axle 22 is overloaded. In that event, the EPS system 52 may decrease the amount of electric motor torque 132, or add negative electric motor torque 132, resulting in an unusually "stiff" steering feel, in order to alert the operator to the overload condition.

Alternatively the operator may be signaled of an overload condition on the vehicle display.

In Fig. 8C, comparison is made between the amount of electric motor torque 132 contributed by the EPS system 52 (not shown) under conditions wherein the agricultural tractor 10 has a normal weight distribution (left side) and under conditions wherein the agricultural tractor 10 has an increased weight on the front wheels 16 as measured by an increased load on the front axle 22 and front suspension 150 (right side). Front suspension hydraulic cylinders 152 have increased hydraulic pressure as a result of the load on the front suspension 150, which is reported from the pressure sensors 152a to the EPS ECU 108 of the EPS unit 102 (not shown), and may be reported by way of the ISOBUS network or CANbus 40 (not shown). As a result, the EPS system 52 increases the amount of electric motor torque 132, resulting in a "softer" steering feel. Again, this alteration of the steering feel may be done with a target of restoring a base-line level of required steering torque to be provided by the operator, or may involve providing electric motor torque 132 sufficient to result in an amount of required steering torque to be provided by the operator particularly suited to the weight distribution resulting from the increased weight on the front axle 22. It is also contemplated in at least one embodiment of the present invention that the EPS system 52 may determine by way of excessive hydraulic pressure reported by the pressure sensors 152a that the front axle 22 is overloaded. In that event, the EPS system 52 may decrease the amount of electric motor torque 132, or add negative electric motor torque 132, resulting in an unusually "stiff" steering feel, in order to alert the operator to the overload condition.

Alternatively the operator may be signaled of an overload condition on the vehicle display.

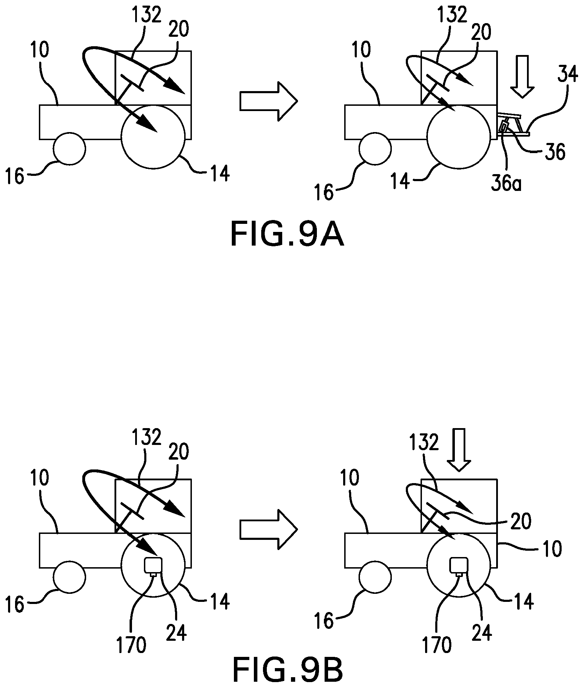

In Fig. 9A, comparison is made between the amount of electric motor torque 132 contributed by the EPS system 52 (not shown) under conditions wherein the agricultural tractor 10 has a normal weight distribution (left side) and under conditions wherein the agricultural tractor 10 has an increased weight on the rear wheels 14 as a result of a load on the rear three point hitch 34 (right side). Three point hitch hydraulic cylinder 36 has increased hydraulic pressure as a result of the load on the three point hitch 34, which is reported from the pressure sensors 36a to the EPS ECU 108 of the EPS unit 102 (not shown), and which may be reported by way of the ISOBUS network or CANbus 40 (not shown). As a result, the EPS system 52 decreases the amount of electric motor torque 132, or may even apply a negative electric motor torque 132, thereby resulting in a "stiffer" steering feel. Again, this alteration of the steering feel may be done with a target of restoring a base-line level of required steering torque to be provided by the operator, or may involve reducing electric motor torque 132 sufficiently to result in an amount of required steering torque to be provided by the operator particularly suited to the weight distribution resulting from the increased weight on the rear wheels 14. It is also contemplated in at least one embodiment of the present invention that the EPS system 52 may determine by way of excessive hydraulic pressure reported by the pressure sensors 36a that the rear three point hitch 34 is overloaded and/or the rear axle 24 is overloaded. In that event, the EPS system 52 may further decrease the amount of electric motor torque 132, or add even more negative electric motor torque 132, resulting in an unusually "stiff" steering feel, in order to alert the operator to the overload condition.

Alternatively the operator may be signaled of an overload condition on the vehicle display.

In Fig. 9B, comparison is made between the amount of electric motor torque 132 contributed by the EPS system 52 (not shown) under conditions wherein the agricultural tractor 10 has a normal weight distribution (left side) and under conditions wherein the agricultural tractor 10 has an increased weight on the rear wheels 14 as a result of increased load on the rear axle 24 (right side). The increased load on the rear axle 24 is reported from the rear axle load sensor 170 to the EPS ECU 108 of the EPS unit 102 (not shown), and may be reported by way of the ISOBUS network or CANbus 40 (not shown). As a result, the EPS system 52 decreases the amount of electric motor torque 132, or may apply a negative electric motor torque 132, thereby resulting in a "stiffer" steering feel. Again, this alteration of the steering feel may be done with a target of restoring a base-line level of required steering torque to be provided by the operator, or may involve reducing electric motor torque 132 sufficiently to result in an amount of required steering torque to be provided by the operator particularly suited to the weight distribution resulting from the increased weight on the rear axle 24. It is also contemplated in at least one embodiment of the present invention that the EPS system 52 may determine by way of the rear axle load sensor 170 that rear axle 24 is overloaded. In that event, the EPS system 52 may further decrease the amount of electric motor torque 132, or add even more negative electric motor torque 132, resulting in an unusually "stiff" steering feel, in order to alert the operator to the overload condition.

Alternatively the operator may be signaled of an overload condition on the vehicle display.

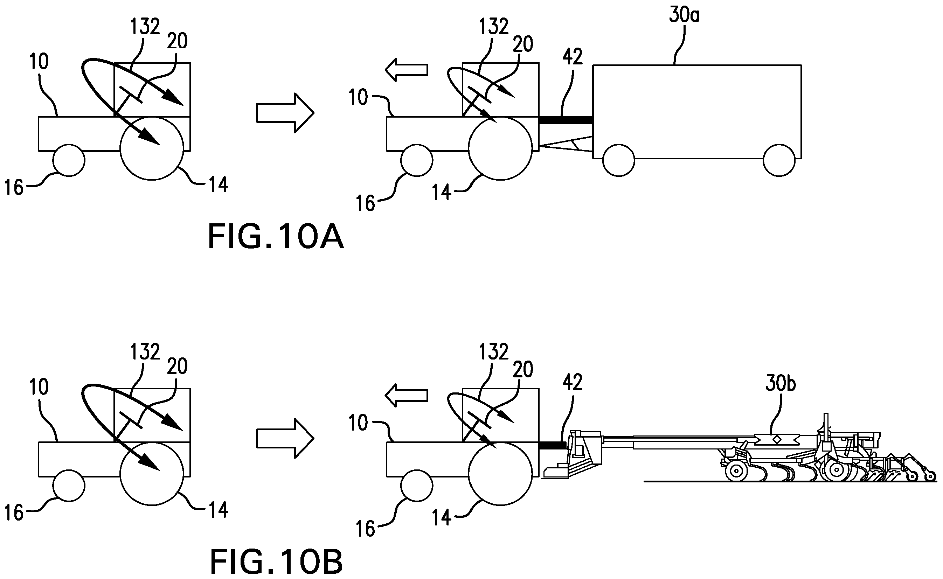

In Figs. 10A and 10B, comparison is made between the amount of electric motor torque 132 contributed by the EPS system 52 (not shown) under conditions wherein the agricultural tractor 10 has a normal weight distribution (left side) and under conditions wherein the weight distribution of the agricultural tractor 10 is changed as a result of one or more trailers 30a or agricultural implements 30b being connected to the agricultural tractor 10 (right side). Each of the one or more trailers 30a or agricultural implements 30b are connected to the EPS ECU 108 of the EPS unit 102 (not shown) e.g. by way of the ISOBUS network or CANbus 40. In this example, the ISOBUS network or CANbus 40 transmits to the EPS ECU 108 of the EPS unit 102 information about the one or more trailers 30a or agricultural implements 30b, which information may include the dimensional characteristics, the ground engaging characteristics, and/or the weight of the one or more trailers 30a or agricultural implements 30b.

As a result of the information transmitted about the one or more trailers 30a or agricultural implements 30b, the EPS system 52 may decrease the amount of electric motor torque 132, resulting in a "stiffer" steering feel. Again, this alteration of the steering feel may be done with a target of restoring a base-line level of required steering torque to be provided by the operator, or may involve reducing electric motor torque 132 sufficiently to result in an amount of required steering torque to be provided by the operator particularly suited to the weight distribution resulting from connecting the one or more trailers 30a or agricultural implements 30b to the agricultural tractor 10.

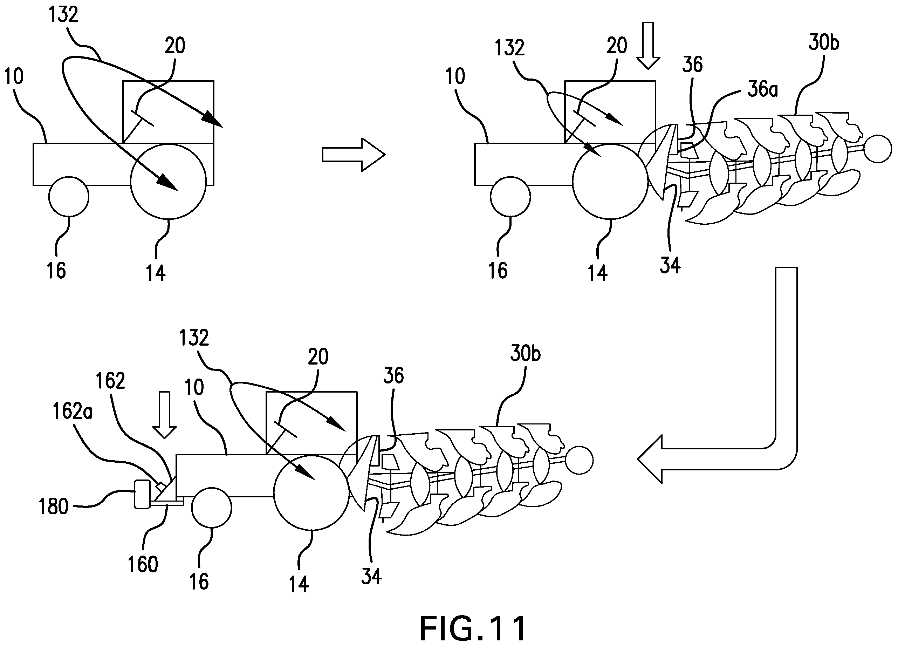

Turning now to Fig. 11, comparisons are made between the amount of electric motor torque 132 contributed by the EPS system 52 (not shown) under conditions wherein the agricultural tractor 10 has no load (upper left), wherein the agricultural tractor 10 has an increased weight on the rear wheels 14 as a result of a load such as agricultural attachment or implement 30b connected, for example, to the three point hitch 34 (upper right), and wherein ballast 180 has been added to the front of the agricultural tractor 10, for example attached to the front hitch 160, in order to compensate for the agricultural attachment or implement 30b connected to the rear of the agricultural tractor 10 (lower middle). As can be seen between the unloaded agricultural tractor 10 and the agricultural tractor 10 with only the agricultural attachment or implement 30b connected to the three point hitch 34, the three point hitch hydraulic cylinder 36 has increased hydraulic pressure as a result of the load on the three point hitch 34, which is reported from the pressure sensors 36a to the EPS ECU 108 of the EPS unit 102 (not shown), and which may be reported by way of the ISOBUS network or CANbus 40 (not shown). As a result, the EPS system 52 has decreased the amount of electric motor torque 132, or may have even applied a negative electric motor torque 132, thereby resulting in a "stiffer" steering feel.

As between the agricultural tractor 10 with only the agricultural attachment or implement 30b connected to the three point hitch 34, and the agricultural tractor 10 with both the agricultural attachment or implement 30b connected to the three point hitch 34 and ballast 180 attached to the front hitch 160, in the latter instance both the three point hitch hydraulic cylinder 36 has increased hydraulic pressure as a result of the load on the three point hitch 34 and the front hitch hydraulic cylinder 162 and/or the front suspension hydraulic cylinders 152 have increased hydraulic pressure as a result of the load on the front hitch 160, which is reported from the pressure sensor 162a and/or from the pressure sensor 152a to the EPS ECU 108 of the EPS unit 102 (not shown), and may be reported by way of the ISOBUS network or CANbus 40 (not shown). As a result, the EPS system 52 has re-increased the amount of electric motor torque 132, restoring a "softer" steering feel. The amount of electric motor torque 132 used with the attachment or implement 30b connected to the three point hitch 34 and the ballast 180 attached to the front hitch 160 may be greater than the amount of electric motor torque 132 used with only the agricultural attachment or implement 30b connected to the three point hitch 34, while being greater than, less than, or equal to the amount of electric motor torque 132 used with the unloaded agricultural tractor 10. Again, this alteration of the steering feel may be done with a target of restoring a base-line level of required steering torque to be provided by the operator, or may involve providing electric motor torque 132 sufficient to result in an amount of required steering torque to be provided by the operator particularly suited to the weight distribution resulting from both the agricultural attachment or implement 30b being connected to the three point hitch 34 and ballast 180 being attached to the front hitch 160.

It is contemplated that the amount of electric motor torque 132 used with the attachment or implement 30b connected to the three point hitch 34 and the ballast 180 attached to the front hitch 160 may be greater than the amount of electric motor torque 132 used with the unloaded agricultural tractor 10, in order to offset the overall increased weight on both the front wheels 16 and the rear wheels 14. Alternatively, it is contemplated that the amount of electric motor torque 132 used with the attachment or implement 30b connected to the three point hitch 34 and the ballast 180 attached to the front hitch 160 may be lesser than the amount of electric motor torque 132 used with the unloaded agricultural tractor 10, in order to provide tactile feedback to an operator by way of the stiffer steering feel that the agricultural tractor 10 is heavily loaded. It is also contemplated in at least one embodiment of the present invention that the EPS system 52 may determine by way of excessive hydraulic pressure reported by the pressure sensors 36a and/or 162a and/or 152a that the rear three point hitch 34 and/or the front hitch 160 is overloaded and/or the front axle 22 and/or rear axle 24 is overloaded. In that event, the EPS system 52 may further decrease the amount of electric motor torque 132, or add even more negative electric motor torque 132, resulting in an unusually "stiff" steering feel, in order to alert the operator to the overload condition. Alternatively the operator may be signaled of an overload condition on the vehicle display.

It is also contemplated in at least one embodiment of the present invention that the EPS system 52 may determine by way of the hydraulic pressure reported by the pressure sensors 36a and 162a that a proper amount of ballast 180 has been used by the operator in view of the weight of the agricultural attachment or implement 30b connected to the three point hitch 34. In this case, the EPS system 52 may further increase the amount of electric motor torque 132, temporarily providing an unusually "soft" steering feel in order to indicate that a proper amount of ballast 180 has been used by the operator. Alternatively the operator may be signaled of good ballasting on the vehicle display.

Note that the agricultural tractor 10 described herein has in each instance been described as having a front steerable axle. However, it is contemplated that the principles of the present disclosure are applicable to an agricultural tractor or other off-road vehicle that is articulated and steers by use of a central pivot, or to an off-road vehicle that uses a rear steerable axle, or to an off-road vehicle that uses both front and rear steerable axles.

The invention is defined by the scope of the appended claims.

## Claims

1. A power steering system (52) for an off-road vehicle (10), comprising:
an electric assisted power steering (EPS) unit (102) for adding and subtracting torque (132) to a rotatable steering column (54), said EPS unit (102) having an electronic control unit (ECU) (108) configured to determine the magnitude and direction of action of the torque (132) to be added or subtracted by the EPS unit (102), said EPS unit (102) having a rotary electric motor (104), which is operably engaged with the rotatable steering column (54)
**characterized in that**:
at least one sensor (36a, 38a, 152a, 162a, 170) is configured to sense at least one of pressure, proximity, strain, and displacement in at least one of a component and an attachment of the off-road vehicle (10);
said ECU (108) is configured to receive information from said at least one sensor (36a, 38a, 152a, 162a, 170) and to use said information to determine a weight distribution of said off-road vehicle (10); and
said ECU (108) is configured to control said EPS unit (102) by way of a signal generator (110) that generates control signals in order to direct the rotary electric motor (104) to add or subtract said torque (132) to said rotatable steering column (54) as a function of said weight distribution of said off-road vehicle (10).

2. The power steering system (52) of claim 1, wherein:
said at least one sensor (36a, 38a, 152a, 162a, 170) is at least one fluid pressure sensor (36a, 38a, 152a, 162a) and is connected to at least one of:
at least one fluid actuating and/or support cylinder (152) of at least one of a rear suspension and a front suspension (150) of said off-road vehicle (10);
at least one fluid actuating cylinder (36) of a three point hitch (34) of said off-road vehicle (10);
at least one fluid actuating cylinder (162) of a front hitch (160) of said off-road vehicle (10); and
at least one fluid actuating and/or support cylinder (38) of at least one attachment (32) of said off-road vehicle (10).

3. The power steering system (52) of claims 1 - 2, wherein:
said ECU (108) being further configured to control said EPS unit (102) to add or subtract said torque (132) to said rotatable steering column (54) at least one of:
sufficient to restore a base-line level of steering torque (130) required by an operator;
sufficient to create an amount of steering torque (130) required by an operator particularly suited to said weight distribution of said off-road vehicle (10); and
sufficient to alert the operator to an overload condition.

4. The power steering system (52) of claims 1 - 3, wherein:
said ECU (108) being further linked to a trailer (30a) or implement (30b) that is connected to said vehicle (10), said ECU (108) being further configured to receive information concerning characteristics of said trailer (30a) or implement (30b); and
said ECU (108) being further configured to use said information concerning said characteristics of said trailer (30a) or implement (30b) to determine a further change to said weight distribution of said off-road vehicle (10).

5. The power steering system (52) of claims 1 - 4, wherein:
said ECU (108) being further configured to receive information by way of at least one of a camera with recognition software, wireless or short-range communications, Bluetooth, and wireless data exchange protocol, said information concerning characteristics of a trailer (30a) or implement (30b) that is connected to said vehicle (10); and
said ECU (108) being further configured to use said information concerning said characteristics of said trailer (30a) or implement (30b) to determine a further change to said weight distribution of said off-road vehicle (10).

6. The power steering system (52) of claims 4 - 5, wherein:
said ECU (108) is configured to control said EPS unit (102) to subtract said torque (132) to said rotatable steering column (54) as a function of said information concerning said characteristics of said trailer (30a) or said implement (30b) that is connected to said off-road vehicle (10).

7. The power steering system (52) of claims 2 - 6, wherein:
said ECU (108) is configured to control said EPS unit (102) to add said torque (132) to said rotatable steering column (54) as a function of increased pressure in at least one of:
said at least one fluid actuating and/or support cylinder (152) of said front suspension (150) of said off-road vehicle (10);
said at least one fluid actuating cylinder (162) of said front hitch (160) of said off-road vehicle (10); and
at least one fluid actuating and/or support cylinder (38) of at least one front attachment (32) of said off-road vehicle (10).

8. The power steering system (52) of claims 2 - 6, wherein:
said ECU (108) is configured to control said EPS unit (102) to subtract said torque (132) from said rotatable steering column (54) as a function of increased pressure in at least one of:
said at least one fluid actuating and/or support cylinder of said rear suspension of said off-road vehicle (10);
said at least one fluid actuating cylinder (36) of said three point hitch (34) of said off-road vehicle (10); and
at least one fluid actuating and/or support cylinder of at least one rear attachment of said off-road vehicle (10).

9. The power steering system (52) of claims 2 - 6, wherein:
said ECU (108) is configured to control said EPS unit (102) to add or subtract said torque (132) to said rotatable steering column (54) as a function of increased pressure in at least one of:
said at least one fluid actuating and/or support cylinder (152) of said front suspension (150) of said off-road vehicle (10);
said at least one fluid actuating cylinder (162) of said front hitch (160) of said off-road vehicle (10); and
at least one fluid actuating and/or support cylinder (38) of at least one front attachment (32) of said off-road vehicle (10);
and in at least one of:
said at least one fluid actuating and/or support cylinder of said rear suspension of said off-road vehicle (10);
said at least one fluid actuating cylinder (36) of said three point hitch (34) of said off-road vehicle (10); and
at least one fluid actuating and/or support cylinder of at least one rear attachment of said off-road vehicle (10);
said ECU (108) being further configured to recognize the use of ballast (180) on said off-road vehicle (10) and to control said EPS unit (102) to add or subtract said torque (132) to said rotatable steering column (54) at least one of:
sufficient to create an amount of steering torque (130) required by an operator particularly suited to the use of ballast (180) on said off-road vehicle (10);
sufficient to alert the operator to an overload condition associated with the use of ballast (180) on said off-road vehicle (10); and
sufficient to indicate that a proper amount of ballast (180) has been used on said off-road vehicle.

10. The power steering system (52) of claims 1 - 9, wherein:
said ECU (108) is further configured to control said EPS unit (102) to add or subtract said torque (132) to said rotatable steering column (54) as a function of at least one of the speed of said off-road vehicle (10), the rate of change of speed of said off-road vehicle (10), the position of a steering input member (20) of said off-road vehicle (10), the rate of change of the position of said steering input member (20), and the steering position of a steering axle (22).

11. The power steering system (52) of claims 1 - 10, wherein:
said ECU (108) is further programmable, so that the functional relationship between said weight distribution of said off-road vehicle (10) and said addition or subtraction of said torque (132) to said rotatable steering column (54) may be modified by an operator of said off-road vehicle (10).

12. The power steering system (52) of claims 1 - 11, wherein:
said ECU (108) further requiring confirmation by an operator of said addition or subtraction of said torque (132) to said rotatable steering column (54).

13. An off-road vehicle (10) comprising:
a chassis (12), at least one steerable axle (22), a steering mechanism (50), and the power steering system (52) of any of claims (1 - 11).

## Patentansprüche

1. Servolenksystem (52) für ein Geländefahrzeug (10) mit:
einer elektrisch unterstützten Servolenkeinheit (electric assisted power steering, EPS) (102) zum Aufbringen und Abnehmen eines Drehmoments (132) auf bzw. von einer drehbaren Lenksäule (54), wobei die EPS-Einheit (102) eine elektronische Steuereinrichtung (electronic control unit, ECU) (108) aufweist, die dazu eingerichtet ist, die Größe und Wirkrichtung des Drehmoments (132) zu bestimmen, das von der EPS-Einheit (102) aufzubringen oder abzunehmen ist, wobei die EPS-Einheit (102) einen drehenden Elektromotor (104) aufweist, der wirkend mit der drehbaren Lenksäule (54) in Eingriff steht,
**dadurch gekennzeichnet, dass**:
mindestens ein Sensor (36a, 38a, 152a, 162a, 170) dazu eingerichtet ist, mindestens eines aus einem Druck, einer Lage, einer Belastung und einer Verschiebung in mindestens einem aus einer Komponente und einem Anbaugerät des Geländefahrzeugs (10) zu erfassen;
die ECU (108) dazu eingerichtet ist, Informationen von dem mindestens einen Sensor (36a, 38a, 152a, 162a, 170) zu empfangen und die Informationen zu verwenden, um eine Gewichtsverteilung des Geländefahrzeugs (10) zu ermitteln; und
die ECU (108) dazu eingerichtet ist, die EPS-Einheit (102) mittels eines Signalgebers (110) zu steuern, der Steuersignale erzeugt, um den drehenden Elektromotor (104) anzuweisen, in Abhängigkeit von der Gewichtsverteilung des Geländefahrzeugs (10) Drehmoment (132) auf die drehbare Lenksäule (54) aufzubringen oder von dieser abzunehmen.

2. Servolenksystem (52) nach Anspruch 1, wobei:
der mindestens eine Sensor (36a, 38a, 152a, 162a, 170) zumindest ein Fluid-Drucksensor (36a, 38a, 152a, 162a) ist und mit mindestens einem der folgenden verbunden ist:
mindestens einem fluidbetätigten und/oder Unterstützungszylinder (152) von zumindest einer aus der Hinterradaufhängung und der Vorderradaufhängung (150) des Geländefahrzeugs (10);
mindestens einem fluidbetätigten Zylinder (36) einer Dreipunkt-Anhängevorrichtung (34) des Geländefahrzeugs (10);
mindestens einem fluidbetätigten Zylinder (162) einer Front-Anhängevorrichtung (160) des Geländefahrzeugs (10); und
mindestens einem fluidbetätigten und/oder Unterstützungszylinder (38) zumindest eines Anbaugeräts (32) des Geländefahrzeugs (10).

3. Servolenksystem (52) nach den Ansprüchen 1 bis 2, wobei:
die ECU (108) weiterhin dazu eingerichtet ist, die EPS-Einheit (102) zu steuern, um das Drehmoment (132) auf mindestens eine der folgenden Arten auf die drehbare Lenksäule (54) aufzubringen bzw. von dieser abzunehmen:
ausreichend, um ein Grundniveau an Lenkmoment (130) wiederherzustellen, das von einem Bediener gefordert wird;
ausreichend, um ein Lenkmoment (130) von der Größe zu erzeugen, die von einem Bediener gefordert wird und speziell auf die Gewichtsverteilung des Geländefahrzeugs (10) angepasst ist; und
ausreichend, um den Bediener auf eine Überlastsituation aufmerksam zu machen.

4. Servolenksystem (52) nach den Ansprüchen 1 bis 3, wobei:
die ECU (108) weiterhin mit einem Anhänger (30a) oder einem Arbeitsgerät (30b), das mit dem Fahrzeug (10) verbunden ist, verknüpft ist, wobei die ECU (108) weiterhin dazu eingerichtet ist, Informationen bezüglich der Eigenschaften des Anhängers (30a) oder des Arbeitsgeräts (30b) zu empfangen; und
die ECU (108) weiterhin dazu eingerichtet ist, die Informationen bezüglich der Eigenschaften des Anhängers (30a) oder des Arbeitsgeräts (30b) zu verwenden, um eine weitere Veränderung der Gewichtsverteilung des Geländefahrzeugs (10) zu ermitteln.

5. Servolenksystem (52) nach den Ansprüchen 1 bis 4, wobei:
die ECU (108) weiterhin dazu eingerichtet ist, Informationen mittels mindestens einem aus einer Kamera mit einer Erkennungssoftware, einer kabellosen oder Kurzstrecken-Kommunikation, Bluetooth, und mittels eines kabellosen Datenaustauschprotokolls zu empfangen, wobei die Informationen Eigenschaften des Anhängers (30a) oder des Arbeitsgeräts (30b), das mit dem Fahrzeug (10) verbunden ist, betreffen; und
die ECU (108) weiterhin dazu eingerichtet ist, die Informationen bezüglich der Eigenschaften des Anhängers (30a) oder des Arbeitsgeräts (30b) zu verwenden, um eine Veränderung der Gewichtsverteilung des Geländefahrzeugs (10) zu ermitteln.

6. Servolenksystem (52) nach den Ansprüchen 4 bis 5, wobei:
die ECU (108) dazu eingerichtet ist, die EPS-Einheit (102) zu steuern, um das Drehmoment (132) in Abhängigkeit von den Informationen bezüglich der Eigenschaften des Anhängers (30a) oder des Arbeitsgeräts (30b), das mit dem Fahrzeug (10) verbunden ist, von der drehbaren Lenksäule (54) abzunehmen.

7. Servolenksystem (52) nach den Ansprüchen 2 bis 6, wobei:
die ECU (108) dazu eingerichtet ist, die EPS-Einheit (102) zu steuern, um das Drehmoment (132) auf die drehbare Lenksäule (54) aufzubringen, in Abhängigkeit von erhöhtem Druck in mindestens einem der folgenden:
dem mindestens einen fluidbetätigten und/oder Unterstützungszylinder (152) der Vorderradaufhängung (150) des Geländefahrzeugs (10);
dem mindestens einen fluidbetätigten Zylinder (162) der Front-Anhängevorrichtung (160) des Geländefahrzeugs (10); und
mindestens einem fluidbetätigten und/oder Unterstützungszylinder von zumindest einem vorderen Anbaugerät (32) des Geländefahrzeugs (10).

8. Servolenksystem (52) nach den Ansprüchen 2 bis 6, wobei:
die ECU (108) dazu eingerichtet ist, die EPS-Einheit (102) zu steuern, um das Drehmoment (132) von der drehbaren Lenksäule (54) abzunehmen, in Abhängigkeit von erhöhtem Druck in mindestens einem der folgenden:
dem mindestens einen fluidbetätigten und/oder Unterstützungszylinder der Hinterradaufhängung des Geländefahrzeugs (10);
dem mindestens einen fluidbetätigten Zylinder (36) der Dreipunkt-Anhängevorrichtung (34) des Geländefahrzeugs (10); und
mindestens einem fluidbetätigten und/oder Unterstützungszylinder von zumindest einem hinteren Anbaugerät des Geländefahrzeugs (10).

9. Servolenksystem (52) nach den Ansprüchen 2 bis 6, wobei:
die ECU (108) dazu eingerichtet ist, die EPS-Einheit (102) zu steuern, um das Drehmoment (132) auf die drehbare Lenksäule (54) aufzubringen oder von dieser abzunehmen, in Abhängigkeit von erhöhtem Druck in mindestens einem der folgenden:
dem mindestens einen fluidbetätigten und/oder Unterstützungszylinder (152) der Vorderradaufhängung (150) des Geländefahrzeugs (10);
dem mindestens einen fluidbetätigten Zylinder (162) der Front-Anhängevorrichtung (160) des Geländefahrzeugs (10); und
mindestens einem fluidbetätigten und/oder Unterstützungszylinder (38) zumindest eines vorderen Anbaugeräts (32) des Geländefahrzeugs (10);
und in mindestens einem der folgenden:
dem mindestens einen fluidbetätigten und/oder Unterstützungszylinder der Hinterradaufhängung des Geländefahrzeugs (10);
dem mindestens einen fluidbetätigten Zylinder (36) der Dreipunkt-Anhängevorrichtung (34) des Geländefahrzeugs (10); und
mindestens einem fluidbetätigten und/oder Unterstützungszylinder zumindest eines hinteren Anbaugeräts des Geländefahrzeugs (10);
wobei die ECU (108) weiterhin dazu eingerichtet ist, die Verwendung von Ballast (180) am Geländefahrzeug (10) zu erkennen und die EPS-Einheit (102) zu steuern, um das Drehmoment (132) auf mindestens einer der folgenden Arten auf die drehbare Lenksäule (54) aufzubringen oder von dieser abzunehmen:
ausreichend, um ein Lenkmoment (130) von der Größe zu erzeugen, die von einem Bediener gefordert wird und speziell auf die Verwendung von Ballast (180) am Geländefahrzeug (10) angepasst ist;
ausreichend, um den Bediener auf eine Überlastsituation aufmerksam zu machen, die mit der Verwendung von Ballast (180) am Geländefahrzeug (10) in Verbindung steht; und
ausreichend, um darauf hinzuweisen, dass eine angemessene Ballastmenge (180) am Geländefahrzeug verwendet wurde.

10. Servolenksystem (52) nach den Ansprüchen 1 bis 9, wobei:
die ECU (108) weiterhin dazu eingerichtet ist, die EPS-Einheit (102) zu steuern, um das Drehmoment (132) in Abhängigkeit von mindestens einem aus der Geschwindigkeit des Geländefahrzeugs (10), der Veränderungsrate der Geschwindigkeit des Geländefahrzeugs (10), der Position eines Lenkeingabeelements (20) des Geländefahrzeugs (10), der Veränderungsrate der Position des Lenkeingabeelements (20), und der Lenkposition einer Lenkachse (22) auf die drehbare Lenksäule (54) aufzubringen oder von dieser abzunehmen.

11. Servolenksystem (52) nach den Ansprüchen 1 bis 10, wobei:
die ECU (108) weiterhin derart programmierbar ist, dass die funktionale Beziehung zwischen der Gewichtsverteilung des Geländefahrzeugs (10) und dem Aufbringen oder dem Abnehmen des Drehmoments (132) auf die bzw. von der drehbaren Lenksäule (54) von einem Bediener des Geländefahrzeugs (10) modifiziert werden kann.

12. Servolenksystem (52) nach den Ansprüchen 1 bis 11, wobei:
die ECU (108) weiterhin zum Aufbringen oder zum Abnehmen des Drehmoments (132) auf die bzw. von der drehbaren Lenksäule (54) eine Bestätigung durch den Bediener benötigt.

13. Geländefahrzeug (10) mit:
einem Fahrgestell (12), mindestens einer lenkbaren Achse (22), einem Lenkmechanismus (50) und einem Servolenksystem (52) nach einem der Ansprüche 1 bis 11.

## Revendications

1. Système de direction assistée (52) pour véhicule tout-terrain (10), comprenant :
une unité de direction assistée électrique (EPS) (102) destinée à l'ajout et à la soustraction d'un couple (132) à une colonne de direction rotative (54), ladite unité EPS (102) ayant une unité de commande électronique (ECU) (108) configurée pour déterminer l'ampleur et la direction de l'action du couple (132) à ajouter ou à soustraire par l'unité EPS (102), ladite unité EPS (102) ayant un moteur électrique rotatif (104), qui est entraîné de manière fonctionnelle avec la colonne de direction rotative (54),
**caractérisé en ce que** :
au moins un capteur (36a, 38a, 152a, 162a, 170) est configuré pour détecter au moins une pression, une proximité, une tension et un déplacement dans au moins un composant et un accessoire du véhicule tout-terrain (10) ;
ladite ECU (108) est configurée pour recevoir des informations dudit au moins un capteur (36a, 38a, 152a, 162a, 170) et pour utiliser ladite information afin de déterminer une répartition du poids dudit véhicule tout-terrain (10) ; et
ladite ECU (108) est configurée pour commander ladite unité EPS (102) par le biais d'un générateur de signaux (110) qui génère des signaux de commande afin de commander le moteur électrique rotatif (104) d'ajouter ou de soustraire ledit couple (132) de ladite colonne de direction rotative (54) en fonction de ladite répartition du poids dudit véhicule tout-terrain (10).

2. Système de direction assistée (52) selon la revendication 1, dans lequel :
ledit au moins un capteur (36a, 38a, 152a, 162a, 170) est au moins un capteur de pression de fluide (36a, 38a, 152a, 162a) et est relié à au moins :
un vérin d'actionnement à fluide et/ou un vérin support (152) d'au moins une suspension arrière et une suspension avant (150) dudit véhicule tout-terrain (10) ;
un vérin d'actionnement à fluide (36) d'un attelage à trois points (34) dudit véhicule tout-terrain (10) ;
un vérin d'actionnement à fluide (162) d'un attelage avant (160) dudit véhicule tout-terrain (10) ; et
un vérin d'actionnement à fluide et/ou un vérin support (38) d'au moins un accessoire (32) dudit véhicule tout-terrain (10).

3. Système de direction assistée (52) selon les revendications 1 à 2, dans lequel :
ladite ECU (108) étant en outre configurée pour commander ladite unité EPS (102) d'ajouter ou de soustraire ledit couple (132) de ladite colonne de direction rotative (54) qui est au moins :
suffisant pour rétablir un niveau de base du couple de direction (130) requis par un opérateur ;
suffisant pour créer un couple de direction (130) requis par un opérateur particulièrement adapté à ladite répartition du poids du véhicule tout-terrain (10) ; et
suffisant pour avertir l'opérateur d'une condition de surcharge.

4. Système de direction assistée (52) selon les revendications 1 à 3, dans lequel :
ladite ECU (108) est en outre reliée à une remorque (30a) ou un outil (30b) qui est connecté(e) audit véhicule (10), ladite ECU (108) étant en outre configurée pour recevoir de l'information concernant les caractéristiques de ladite remorque (30a) ou dudit outil (30b) ; et
ladite ECU (108) étant en outre configurée pour utiliser ladite information concernant lesdites caractéristiques de ladite remorque (30a) ou dudit outil (30b) afin de déterminer un autre changement au niveau de ladite répartition du poids dudit véhicule tout-terrain (10).

5. Système de direction assistée (52) selon les revendications 1 à 4, dans lequel :
ladite ECU (108) étant en outre configurée pour recevoir de l'information par le biais d'au moins une caméra équipée d'un logiciel de reconnaissance, d'une communication sans fil ou à courte distance, de Bluetooth, et d'un protocole d'échange de données sans fil, ladite information concernant les caractéristiques d'une remorque (30a) ou d'un outil (30b) qui est relié(e) audit véhicule (10) ; et
ladite ECU (108) étant en outre configurée pour utiliser ladite information concernant lesdites caractéristiques de ladite remorque (30a) ou dudit outil (30b) afin de déterminer un autre changement au niveau de ladite répartition du poids dudit véhicule tout-terrain (10).

6. Système de direction assistée (52) selon les revendications 4 à 5, dans lequel :
ladite ECU (108) est configurée pour commander ladite unité EPS (102) de soustraire ledit couple (132) de la colonne de direction rotative (54) en fonction de ladite information concernant lesdites caractéristiques de ladite remorque (30a) ou dudit outil (30b) qui est relié(e) audit véhicule tout-terrain (10).

7. Système de direction assistée (52) selon les revendications 2 à 6, dans lequel
ladite ECU (108) est configurée pour commander ladite unité EPS (102) d'ajouter ledit couple (132) à ladite colonne de direction rotative (54) en fonction de l'augmentation de la pression dans au moins :
ledit vérin d'actionnement à fluide et/ou vérin support (152) de ladite suspension avant (150) dudit véhicule tout-terrain (10) ;
ledit vérin d'actionnement à fluide (162) dudit attelage avant (160) dudit véhicule tout-terrain (10) ; et
ledit vérin d'actionnement à fluide et/ou un vérin support (38) d'au moins un accessoire avant (32) dudit véhicule tout-terrain (10).

8. Système de direction assistée (52) selon les revendications 2 à 6, dans lequel
ladite ECU (108) est configurée pour commander ladite unité EPS (102) de soustraire ledit couple (132) de ladite colonne de direction rotative (54) en fonction de l'augmentation de pression dans au moins :
ledit vérin d'actionnement à fluide et/ou vérin support de ladite suspension arrière dudit véhicule tout-terrain (10) ;
ledit vérin d'actionnement à fluide (36) dudit attelage à trois points (34) dudit véhicule tout-terrain (10) ; et
ledit vérin d'actionnement à fluide et/ou vérin support d'au moins un accessoire arrière dudit véhicule tout-terrain (10).

9. Système de direction assistée (52) selon les revendications 2 à 6, dans lequel
ladite ECU (108) est configurée pour commander ladite unité EPS (102) d'ajouter ou de soustraire ledit couple (132) de ladite colonne de direction rotative (54) en fonction de l'augmentation de pression dans au moins :
ledit vérin d'actionnement à fluide et/ou vérin support (152) de ladite suspension avant (150) dudit véhicule tout-terrain (10) ;
ledit vérin d'actionnement à fluide (162) dudit attelage avant (160) dudit véhicule tout-terrain (10) ; et
ledit vérin d'actionnement à fluide et/ou vérin support (38) d'au moins un accessoire avant (32) dudit véhicule tout-terrain (10) ;
et dans au moins :
ledit vérin d'actionnement à fluide et/ou vérin support de ladite suspension arrière dudit véhicule tout-terrain (10) ;
ledit vérin d'actionnement à fluide (36) dudit attelage à trois points (34) dudit véhicule tout-terrain (10) ; et
un vérin d'actionnement à fluide et/ou un vérin support d'au moins un accessoire arrière dudit véhicule tout-terrain (10) ;
ladite ECU (108) étant en outre configurée pour reconnaître l'utilisation d'un ballast (180) sur ledit véhicule tout-terrain (10) et pour commander ladite unité de EPS (102) d'ajouter ou de soustraire ledit couple (132) de ladite colonne de direction rotative (54) qui est au moins :
suffisant pour créer un couple de direction (130) requis par un opérateur particulièrement adapté à l'utilisation d'un ballast (180) sur ledit véhicule tout-terrain (10) ;
suffisant pour alerter un opérateur d'une condition de surcharge associée à l'utilisation d'un ballast (180) sur ledit véhicule tout-terrain (10) ; et
suffisant pour indiquer qu'une quantité adéquate de ballast (180) a été utilisée sur ledit véhicule tout-terrain.

10. Système de direction assistée (52) selon les revendications 1 à 9, dans lequel:
ladite ECU (108) est en outre configurée pour commander ladite unité EPS (102) d'ajouter ou de soustraire ledit couple (132) de ladite colonne de direction rotative (54) en fonction d'au moins une vitesse dudit véhicule tout-terrain (10), du degré de modification de la vitesse dudit véhicule tout-terrain (10), de la position d'un organe d'entrée de direction (20) dudit véhicule tout-terrain (10), du degré de modification de la position dudit organe d'entrée de direction (20), et de la position de direction d'un essieu directeur (22).

11. Système de direction assistée (52) selon les revendications 1 à 10, dans lequel
ladite ECU (108) peut en outre être programmée, de sorte que la relation fonctionnelle entre ladite répartition du poids dudit véhicule tout-terrain (10) et ledit ajout ou ladite soustraction dudit couple (132) de ladite colonne de direction rotative (54) puisse être modifiée par un opérateur dudit véhicule tout-terrain (10).

12. Système de direction assistée (52) selon les revendications 1 à 11, dans lequel :
ladite ECU (108) requiert en outre la confirmation par un opérateur dudit ajout ou de ladite soustraction dudit couple (132) de ladite colonne de direction rotative (54).

13. Véhicule tout-terrain (10) comprenant :
un châssis (12), au moins un essieu directionnel (22), un mécanisme de direction (50), et le système de direction assistée (52) selon l'une quelconque des revendications (1 à 11).
